## Europäisches Patentamt

## European Patent Office

## Office européen des brevets

(19)

(11) Numéro de publication: **0 013 246**
**B1**

(12)

# FASCICULE DE BREVET EUROPEEN

(45) Date de publication du fascicule du brevet: **22.12.82**

(51) Int. Cl.³: **C 08 F 10/02, C 08 F 4/60**

(21) Numéro de dépôt: **79401073.6**

(22) Date de dépôt: **28.12.79**

(54) **Procédé pour l'élargissement de la répartition moléculaire du polyéthylène par emploi de deux réacteurs fonctionnant à des pressions et températures très différentes et en absence d'hydrogène et appareil pour sa mise en oeuvre.**

(30) Priorité: **28.12.78 FR 7836624**

(43) Date de publication de la demande:
**09.07.80 Bulletin 80/14**

(45) Mention de la délivrance du brevet:
**22.12.82 Bulletin 82/51**

(84) Etats contractants désignés:
**AT BE DE GB IT NL SE**

(56) Documents cités:
**FR - A - 2 320 311**
**FR - A - 2 346 374**

(73) Titulaire: **Société Chimique des Charbonnages Tour Aurore Place des Reflets Cédex no 5 F-92080 Paris La Défense 2 (FR)**

(72) Inventeur: **Machon, Jean-Pierre 366, rue Benoite Vincent F-62400 Bethune (FR)**
Inventeur: **Durand, Pierre 5, rue Bertaux Dumas F-92200 Neuilly sur Seine (FR)**

(74) Mandataire: **Dubost, Thierry Société Chimique des Charbonnages Service Propriété Industrielle B.P. No 1 F-62160 Bully Les Mines (FR)**

Courier Press, Leamington Spa, England.

Procédé pour l'élargissement de la répartition moléculaire du polyéthylène par emploi de deux réacteurs fonctionnant à des pressions et températures très différentes et en absence d'hydrogène et appareil pour sa mise en oeuvre

La présente invention concerne la polymérisation de l'éthylène sous haute pression et à température élevée et plus particulièrement un procédé pour l'élargissement de la répartition moléculaire du polyéthylène par emploi de deux réacteurs fonctionnant à des pressions et températures très différentes et en absence d'hydrogène. Elle concerne également un appareil pour la mise en oeuvre dudit procédé.

Il est connu de polymériser l'éthylène à pression et température élevées grâce à un système catalytique de type Ziegler comprenant d'une part au moins un composé halogéné de métal de transition et d'autre part au moins un activateur choisi parmi les hydrures et les composés organométalliques des métaux des groupes I à III de la Classification Périodique. Toutefois la fabrication, selon ce procéde, de polyéthylène haute densité ou de copolymères d'éthylène ayant un indice de fluidité (mesuré selon la norme ASTM D 1238—73) compris entre 0,1 et 2 environ et un indice de polydispersité (rapport $M_w/M_n$ de la masse moléculaire moyenne en poids à la masse moléculaire moyenne en nombre) supérieure à 10 est particulièrement délicate. Notamment le choix du système catalytique, le choix des conditions de température et de pression et l'emploi d'un réacteur comportant plusieurs zones fonctionnant dans des conditions différentes ne suffisent pas à modifier l'indice de polydispersité dans le sens désiré.

Une solution au problème précité a été décrite dans le brevet français n° 2.346.374, consistant à liquéfier partiellement à une température de —50°C à +20°C la phase gazeuse provenant d'un premier séparateur sous pression de 80 à 250 bars, à détendre sous une pression de 10 à 60 bars puis à séparer ce flux dans un second séparateur, la phase liquide étant recomprimée et envoyée vers un première zone du réacteur tandis que la phase gazeuse est recomprimée et envoyée vers une seconde zone du réacteur. Cette solution, qui est techniquement satisfaisante puisqu'elle permet d'atteindre un indice de polydispersité de 15 environ, présente un inconvénient économique car elle est coûteuse en énergie.

L'objet de la présente invention est donc de proposer un procédé de fabrication de polymères d'éthylène ayant un indice de fluidité (selon ASTM D 1238—73) compris entre 0,1 et 2 environ, un indice de polydispersité supérieur à 10 environ et comportant suffisamment de très hautes masses moléculaires, toutes propriétés qui sont nécessaires pour la transformation desdits polymères par extrusion-soufflage, ledit procédé ayant un coût énergétique plus faible que les procédés connus.

Cet objet est réalisé conformément à la présente invention, consistant en un procédé utilisant un premier réacteur fonctionnant sous pression de 800 à 2000 bars et à température de 160° à 260°C et un second réacteur fonctionnant sous pression de 300 à 600 bars et à température de 240° à 340°C, la polymérisation de l'éthylène se déroulant dans chacun desdits réacteurs en l'absence totale d'hydrogène et le flux d'éthylène alimentant le second réacteur représentant de 17 à 69% du flux total d'alimentation en éthylène.

Le procédé selon l'invention peut être mis en oeuvre en polymérisant l'éthylène en présence de 1 à 50% en poids d'un hydrocarbure inerte tel que propane ou butane, par exemple. Dans ce cas il sera avantageux que la concentration d'hydrocarbure inerte dans le premier réacteur soit très supérieure à la concentration d'hydrocarbure inerte dans le second réacteur.

Le procédé de l'invention est mis en oeuvre de manière continue et peut être effectué en utilisant des réacteurs soit autoclaves soit tubulaires ou bien en utilisant un réacteur de chaque type. Lesdits réacteurs pourront comporter chacun une ou plusieurs zones réactionelles. L'invention est également applicable à la copolymérisation de l'éthylène avec des $\alpha$-oléfines telles que propylène et butène-1 par exemple, ainsi qu'à la terpolymérisation de l'éthylène avec une $\alpha$-oléfine, telle que le propylène, et avec une dioléfine non conjuguée.

Le procédé selon l'invention est mis en oeuvre grâce à un système catalytique de type Ziegler comprenant d'une part au moins un composé halogéné de métal de transition et d'autre part au moins un activateur choisi parmi les hydrures et les composés organométalliques des métaux des groupes I à III de la Classification Périodique. Parmi les composés halogénés de métal de transition utilisables, bien qu'ils soient très nombreux, on peut citer les complexes $\pi$-allylique ou benzylique du chrome, du zirconium et du titane, les trichlorures de vanadium et de titane (ce dernier éventuellement syncristallisé avec le chlorure d'aluminium sous la forme $TiCl_3 \frac{1}{3}AlCl_3$) éventuellement fixés sur un support comprenant par exemple un halogénure, un monohalogénure ou un hydrohalogénure de magnésium. Tous ces composés peuvent être utilisés en présence d'agents complexants tels que alcools lourds, alcoolates métalliques, silicates d'alkyle, aryl ou alkylsiloxanes, éthers ou amines. Parmi les activateurs utilisables on peut citer notamment les trialkylaluminiums, les halogénodialkylaluminiums et les alkylsiloxalanes. Ces catalyseurs sont de préférence employés sous forme de solutions dans un diluant inerte ou bien sous forme de dispersion.

Bien évidemment le système catalytique sera choisi par l'homme de l'art en fonction de la température du réacteur dans lequel on veut l'utiliser, c'est-à-dire qu'un système catalytique donné sera utilisé dans les conditions de température pour lesquelles sa stabilité thermique et sa réactivité vis-à-vis de l'éthylène sont connues. De même le temps de séjour du système catalytique sera choisi par l'homme de l'art en fonction de la température du réacteur dans lequel on l'utilise et sera généralement compris entre 5 et 80 secondes environ; ce temps sera d'autant plus court que la température d'utilisation du catalyseur sera plus élevée.

Le procédé selon l'invention comporte essentiellement deux modes principaux de réalisation: selon le premier mode, les deux réacteurs sont agencés en série tandis que selon le second mode, les deux réacteurs sont agencés en parallèle.

Le premier mode de réalisation de l'invention est donc caractérisé en ce que l'entrée du second réacteur est reliée, par l'intermédiaire d'une vanne de détente dans laquelle la pression du mélange réactionnel est abaissée d'une valeur supérieure à 800 bars à une valeur inférieure à 600 bars, à la sortie du premier réacteur. Ce mode de réalisation permet effectivement d'atteindre l'objet de l'invention mais le passage du polymère produit dans le premier réacteur vers le réacteur fonctionnant sous pression plus basse constitue une certaine difficulté de fonctionnement du procédé par le fait qu'il peut perturber l'agitation dans ce second réacteur.

On préfèrera donc le second mode de réalisation caractérisé en ce que les deux réacteurs sont disposés en parallèle entre d'une part l'hypercompresseur assurant leur alimentation en éthylène et d'autre part le séparateur dans lequel le mélange des polymères produits dans les deux réacteurs est séparé de l'éthylène n'ayant pas réagi, lequel est recyclé vers ledit hypercompresseur. Selon cette variante du procédé, les effluents sortant de chaque réacteur sont détendus, par le moyen d'une vanne, jusqu'à une pression égale, aux pertes de charge près, à la pression du séparateur. Cette pression sera avantageusement choisie entre 200 et 500 bars et, de préférence, inférieure de moins de 100 bars à la pression du second réacteur. Lorsque la pression du séparateur sera choisie suffisamment proche de la pression du second réacteur (par exemple inférieure de 50 bars environ à celle-ci), on pourra même supprimer la vanne de détente placée à la sortie du second réacteur. Afin d'éviter des perturbations de l'agitation dans le second réacteur, on trouvera avantageux de choisir une disposition des réacteurs capable d'assurer un mélange efficace des polymères fabriqués dans les deux réacteurs. Une disposition convenable consiste, par exemple, à envoyer le polymère fabriqué dans le premier réacteur et détendu à la pression du second réacteur par passage à travers une vanne vers une zone située en sortie du second réacteur et dans laquelle aucun système catalytique n'est injecté. Cette zone ne constitue donc pas une zone de polymérisation mais une zone de mélange des polymères; sa température s'établira en fonction de la température et du débit d'effluent provenant du premier réacteur d'une part, et en fonction de la température et du débit d'effluent provenant de la dernière zone de polymérisation du second réacteur d'autre part. La température de la zone de mélange du second réacteur est donc le plus souvent comprise entre 200° et 280°C et ne doit donc pas être confondue avec la température de polymérisation dans le second réacteur, comprise entre 240° et 340°C comme indiqué précédemment.

Lorsqu'on utilise la disposition précédente pour assurer un mélange efficace des polymères fabriqués dans les deux réacteurs, un perfectionnement de l'invention consiste à alimenter la zone de mélange du second réacteur en polymère fabriqué dans le premier réacteur au moyen d'un injecteur situé à l'entrée de ladite zone de mélange et alimenté également par de l'éthylène froid en vue d'abaisser subséquemment la température dans le séparateur. Un tel injecteur est conforme par exemple à celui décrit dans le brevet français n° 2.313.399. Il comprend donc:
— une buse d'éjection convergente à travers laquelle parvient un fluide moteur constitué par l'effluent du premier réacteur,
— une zone de mélange convergente dans laquelle ledit fluide moteur pénètre, après avoir traversé la buse d'éjection, pour être mélangé avec de l'éthylène froid, et
— un diffuseur constituant l'extrémité aval de ladite zone de mélange de l'injecteur et relié à la zone de mélange du second réacteur.

Dans cette disposition perfectionnée, l'éthylène froid alimentant la zone de mélange de l'injecteur est soit capté, en aval d'un échangeur de calories, sur le circuit de recyclage reliant le séparateur à l'hypercompresseur, soit alimenté directement à partir d'un circuit de distribution d'éthylène à la pression désirée. Dans les deux cas il est avantageux, pour des raisons énergétiques, que la pression d'injection de l'éthylène froid soit la plus basse possible; cette pression sera de préférence comprise entre 20 et 180 bars. Ainsi le circuit d'alimentation en éthylène froid, dans le cas où celui-ci est capté sur le circuit de recyclage, pourra-t-il comporter en outre une vanne de détente pour abaisser la pression depuis la valeur régnant dans le séparateur jusqu'à la valeur souhaitée à l'entrée de la zone de mélange de l'injecteur.

Le procédé selon l'invention peut être utilisé en combinaison avec le procédé de désactivation de catalyseur décrit dans le brevet français n° 2.302.305 et consistant à injecter dans le réacteur, à proximité de la sortie de celui-ci, au moins un sel alcalin ou alcalino-terreux d'acide carboxylique choisi de façon que ses produits de réaction avec le catalyseur demeurent dans le polymère. Dans le cadre de la présente invention, ledit sel sera avantageusement injecté, à l'état fondu ou bien dilué dans un hydrocarbure, soit près de la sortie du second réacteur soit dans le séparateur. Lorsque les réacteurs sont disposés en parallèle et que le second réacteur comporte une zone de mélange à la suite des zones de polymérisation, l'agent de désactivation du catalyseur sera de préférence injecté dans ladite zone de mélange.

Bien entendu, comme tout procédé de polymérisation de l'éthylène sous haute pression et à température élevée, le procédé selon l'invention comporte, après la première séparation effectuée sous pression comprise entre 200 et 500 bars, une seconde phase de séparation selon laquelle le polymère récupéré à la sortie du séparateur est dégazé dans une trémie sous pression de quelques bars, l'éthylène gazeux récupéré à la sortie de ladite trémie étant recomprimé et mélangé avec l'éthylène du circuit de recyclage principal (décrit précédemment) pour être conduit à l'entrée de l'hypercompresseur.

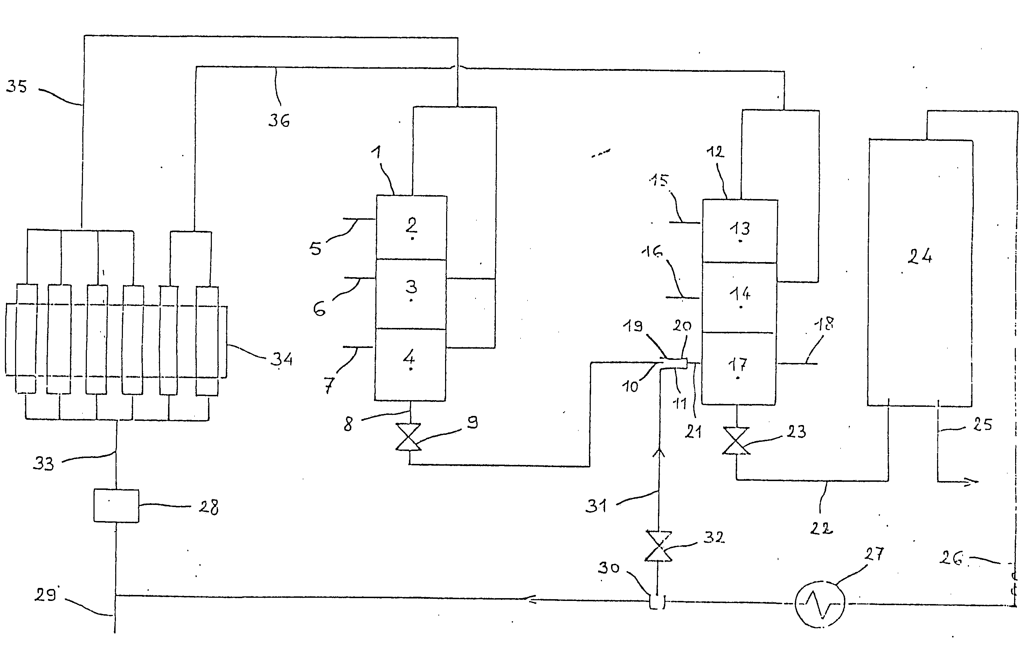

L'invention sera mieux comprise à la lumière de la description de la figure unique représentant un mode préféré de réalisation. Cette figure représente une installation de polymérisation de l'éthylène sous haute pression comprenant un premier réacteur 1 du type autoclave agité divisé intérieurement, au moyen d'écrans, en trois zones 2, 3 et 4 munies respectivement d'injecteurs de catalyseur 5, 6 et 7. A partir de la zone 4, un conduit 8 de prélèvement du mélange réactionnel aboutit, à travers une vanne de détente 9, à la buse d'éjection convergente 10 d'un injecteur 11. L'installation de polymérisation comprend d'une part un second réacteur 12 du type autoclave agité divisé intérieurement, au moyen d'écrans, en deux zones de polymérisation 13 et 14 munies respectivement d'injecteurs de catalyseur 15 et 16 et en une zone de mélange 17 munie d'un injecteur 18 d'agent de désactivation de catalyseur. L'injecteur 11 comporte une zone de mélange convergente 19 ainsi qu'un diffuseur 20 constituant l'extrémité aval de ladite zone 19 et relié par un conduit 21 à la zone 17 du réacteur 12. A partir de la zone 17, un conduit 22 de prélèvement du mélange réactionnel aboutit, à travers une vanne de détente 23, au séparateur 24. Ce séparateur comporte d'une part à sa base un conduit 25 d'évacuation du polymère qui rejoint le dispositif de séparation (sous quelques bars de pression) non représenté sur la figure, et d'autre part à son sommet un conduit 26 qui aboutit, à travers un réfrigérant 27, à l'entrée d'une chambre de mélange 28. Ladite chambre reçoit, outre l'éthylène recyclé par le conduit 26, de l'éthylène frais d'alimentation par un conduit 29 relié à une source d'éthylène non représentée. Cet éthylène peut, comme indiqué plus haut, contenir un diluant et un ou plusieurs comonomères. Le conduit 26 comporte, en aval du réfrigérant 27 mais en amont de la chambre 28, un embranchement 30 à partir duquel un conduit 31 rejoint, à travers une vanne de détente 32, la zone de mélange 19 de l'injecteur. A la sortie de la chambre 28, un conduit 33 rejoint les six cylindres d'un hypercompresseur 34. Quatre desdits cylindres sont affectés à l'alimentation des zones 2 à 4 du réacteur 1 par un conduit 35 tandis que les deux cylindres restants sont affectés à l'alimentation des zones 13 et 14 du réacteur 12 par un conduit 36.

La présente invention concerne donc aussi un appareil pour effectuer la polymérisation de l'éthylène, comportant un premier réacteur ayant au moins une zone munie d'un injecteur de catalyseur, un second réacteur ayant au moins une première zone munie d'un injecteur de catalyseur et une dernière zone non munie d'un injecteur de catalyseur, une vanne de détente située à la sortie du premier réacteur et un conduit reliant ladite vanne à la dernière zone du second réacteur, un séparateur et un conduit reliant la sortie du second réacteur au séparateur, un conduit d'évacuation du polymère à la base dudit séparateur, un hypercompresseur relié par un conduit à la sortie du séparateur et comprenant une première série de cylindres et une seconde série de cylindres, un conduit reliant la première série de cylindres à au moins une zone du premier réacteur, et un conduit reliant la seconde série de cylindres à la première zone du second réacteur.

Selon un mode préféré de réalisation de l'appareil selon l'invention, le conduit reliant la vanne de détente à la dernière zone du second réacteur est muni d'un dispositif capable d'assurer le mélange de l'effluent du premier réacteur et du contenu de ladite dernière zone du second réacteur. De manière préférée, ledit dispositif consiste en un injecteur comprenant une buse d'éjection formant l'extrémité du conduit provenant de la vanne de détente, une zone de mélange convergente en aval de ladite buse d'éjection et reliée à une source l'éthylène froid, et un diffuseur constituant l'extrémité aval de ladite zone de mélange et relié à la dernière zone du second réacteur.

L'invention sera mieux comprise à la lumière des exemples suivants qui ont pour objet de l'illustrer.

Exemple 1

La polymérisation de l'éthylène est effectuée dans une installation conforme à la figure de la planche unique. Les réacteurs 1 et 12 sont des autoclaves de forme cylindrique munis intérieurement d'écrans métalliques qui délimitent trois zones de volume identique.

Le réacteur 1 fonctionne sous une pression de 1100 bars et est alimenté par 67% de l'éthylène total auquel est ajouté 4% en poids environ de propane. La température est de 190°C dans la zone 2, 210°C dans la zone 3 et de 240°C dans la zone 4. Le système catalytique injecté dans ce premier réacteur comprend d'une part du trichlorure de titane violet $TiCl_3 \frac{1}{3}AlCl_3$ et d'autre part du trioctylaluminium en quantité telle que le rapport atomique

$$\frac{Al}{Ti}$$

soit égal à 3. Le temps de séjour moyen de ce système catalytique dans le réacteur 1 est de 60 secondes.

Le réacteur 12 fonctionne sous une pression de 400 bars et est alimenté par 33% de l'éthylène total. La température est de 270°C dans la zone 13, 290°C dans la zone 14 et 230°C dans la zone 17. Le système catalytique injecté dans ce second réacteur comprend d'une part le composé de formule $TiCl_3$, $\frac{1}{3}AlCl_3$, $12MgCl_2$ obtenu par cobroyage du trichlorure de titane violet et du chlorure de magnésium anhydre et d'autre part du diméthyléthyl-diéthylsiloxalane en quantité telle que le rapport atomique

$$\frac{Al}{Ti}$$

soit égal à 3. Le temps de séjour de ce système catalytique dans le réacteur 12 est de 25 secondes.

Le séparateur 24 fonctionne sous une pression de 280 bars et à une température de 230°C. La température de l'éthylène recyclé est abaissée, au niveau du réfrigérant 27, jusqu'à une température de 30°C. Au niveau de l'embranchement 30 de l'installation, un flux représentant 25% de l'éthylène recyclé est dirigé vers la vanne de détente 32, dans laquelle la pression est abaissée jusqu'à 80 bars, puis vers l'injecteur 11. Par l'injecteur 18 on introduit un désactivateur du catalyseur, constitué essentiellement de stéarate de calcium pur fondu.

A aucun point de l'installation on n'introduit d'agent de transfert de chaîne comme l'hydrogène; l'éthylène d'alimentation est par ailleurs contrôlé pour vérifier l'absence d'hydrogène.

Le polymère obtenu est caractérisé par les différentes propriétés indiquées ci-dessous, notamment l'indice de fluidité mesuré selon la norme ASTM D 1238—73, la masse moléculaire moyenne en poids Mw mesurée par chromatographie de perméation de gel, l'indice de polydispersité défini plus haut, la masse volumique et la masse moléculaire moyenne d'ordre supérieur Mz. Celle-ci est définie, la distribution des masses moléculaires C(M) étant obtenue expérimentalement par chromatographie de perméation de gel, par la formule:

$$Mz = \frac{\int_o^\infty M^2 . C(M)\, dM}{\int_o^\infty M . C(M)\, dM}$$

Les valeurs expérimentales de ces propriétés sont les suivantes:
masse volumique: 0,957 g/cm³
indice de fluidité: 0,15 g/10 mn
Mw = 195 000
Mz = 917 000
Indice de polydispersité (Mw/Mn): 13,4

### Exemple 2

La polymérisation de l'éthylène est effectuée conformément au premier mode de réalisation de la présente invention, décrit précédemment, dans deux réacteurs agencés en série. Le premier réacteur est un autoclave de forme cylindrique de volume 3 l divisé intérieurement, au moyen d'écrans métalliques, en trois zones de volume identique. Ce réacteur fonctionne sous une pression de 1500 bars et est alimenté par 50% de l'éthylène total auquel est ajouté 4% en poids environ de propane. La température est de 210°C dans les deux premières zones et de 240°C dans la troisième zone. La constitution et le temps de séjour du système catalytique injecté dans ce réacteur sont identiques à ceux du système injecté dans le réacteur 1 de l'exemple 1.

Le second réacteur est un autoclave de forme torique et de volume 0,9 l constituant une seule zone réactionnelle. Ce réacteur, dont l'entrée est reliée par l'intermédiaire d'une vanne de détente à la sortie du premier réacteur, fonctionne à une température de 270°C et sous une pression de 400 bars et est alimenté par 50% de l'éthylène total. La constitution et le temps de séjour du système catalytique injecté dans ce réacteur sont identiques à ceux du système injecté dans le réacteur 12 de l'exemple 1.

A aucun point de l'installation on n'introduit d'agent de transfert de chaîne comme l'hydrogène; l'éthylène d'alimentation est par ailleurs contrôlé pour vérifier l'absence d'hydrogène.

Le polymère obtenu est caractérisé par les mêmes propriétés que précédemment, lesquelles ont les valeurs expérimentales suivantes:

masse volumique: 0,956 g/cm3
indice de fluidité: 0,65 g/10 mn
Mw: 206 000
Mz = 890 000
Indice de polydispersité: 14,7

### Exemple 3

La copolymérisation de l'éthylène et du propylène est effectuée dans une installation identique à celle de l'exemple 1, le propylène frais d'alimentation étant amené par le conduit 29 relié à une source de propylène non représentée.

Le réacteur 1 fonctionne sous une pression de 2000 bars et est alimenté par 70% du flux total du mélange d'éthylène et de propylène. La température est de 190°C dans la zone 2, 220°C dans la zone 3 et 240°C dans la zone 4. La constitution et le temps de séjour moyen du système catalytique injecté dans ce réacteur sont identiques à ceux du système injecté dans le réacteur 1 de l'exemple 1.

Le réacteur 12 fonctionne sous une pression de 600 bars et est alimenté par 30% du flux total du mélange d'éthylène et de propylène. La température est de 270°C dans la zone 13, 280°C dans la zone 14 et 220°C dans la zone 17. Le système catalytique injecté comprend d'une part le composé de formule $TiCl_3 \frac{1}{3}AlCl_3$, $6MgCl_2$ obtenu par cobroyage du trichlorure de titane violet et du chlorure de magnésium anhydre et d'autre part le diméthyléthyldiéthyl-siloxalane en quantité telle que le rapport atomique

$$\frac{Al}{Ti}$$

soit égal à 3. Le temps de séjour moyen de ce système dans le réacteur 12 est de 25 secondes.

Les flux qui alimentent les réacteurs ont même composition et sont constitués d'un mélange d'éthylène et de propylène dans lequel le teneur en propylène est de 17% en poids.

Les conditions de séparation, de recyclage et de désactivation de catalyseur sont celles décrites à l'exemple 1.

A aucun point de l'installation on n'introduit d'agent de transfert de chaine comme l'hydrogène; l'éthylène d'alimentation est par ailleurs contrôlé pour vérifier l'absence d'hydrogène.

Le copolymère obtenu est caractérisé par les mêmes propriétés que précédemment, lesquelles ont les valeurs expérimentales suivantes:

mass volumique: 0,931 g/cm3
indice de fluidité: 1,5 g/10 mn
Mw = 175 000
Mz = 600 000
Indice de polydispersité: 10,5

**Revendications**

1. Procédé de fabrication de polymères d'éthylène ayant un indice de fluidité compris entre 0,1 et 2 et un indice de polydispersité supérieur à 10, par polymérisation de l'éthylène en présence d'un système catalytique comprenant d'une part au moins un composé halogéné de métal de transition et d'autre part au moins un activateur choisi parmi les hydrures et les composés organométalliques des métaux des groupes I à III de la Classification Périodique, dans un ensemble de deux réacteurs fonctionnant dans des conditions de température et de pression différentes, caractérisé en ce que le premier réacteur fonctionne sous pression de 800 à 2000 bars et à température de 160° à 260°C et le second réacteur fonctionne sous pression de 300 à 600 bars et à température de 240° à 340°C, la polymérisation de l'éthylène se déroulant dans chacun desdits réacteurs en l'absence totale d'hydrogène et le flux d'éthylène alimentant le second réacteur représentant de 17 à 69% du flux total d'alimentation en éthylène.

2. Procédé selon la revendication 1, caractérisé en ce que le premier réacteur et le second réacteur sont agencés en série, l'entrée du second réacteur étant reliée par l'intermédiaire d'une vanne de détente à la sortie du premier réacteur.

3. Procédé selon la revendication 1, caractérisé en ce que le premier réacteur et le second réacteur sont disposés en parallèle entre d'une part l'hypercompresseur assurant leur alimentation en éthylène et d'autre part le séparateur dans lequel le mélange des polymères produits dans les deux réacteurs est séparé de l'éthylène n'ayant pas réagi, lequel est recyclé vers ledit hypercompresseur.

4. Procédé selon la revendication 3, caractérisé en ce que l'effluent du premier réacteur est détendu à la pression du second réacteur par passage à travers une vanne et envoyé vers une zone située en sortie dudit second réacteur, dite zone de mélange du second réacteur, dans laquelle aucun système catalytique n'est injecté et dans laquelle s'effectue le mélange des polymères fabriqués dans les deux réacteurs.

5. Procédé selon la revendication 4, caractérisé en ce que ladite zone de mélange du second réacteur est alimentée en polymère fabriqué dans le premier réacteur au moyen d'un injecteur situé à l'entrée de ladite zone de mélange et alimenté également par de l'éthylène froid.

6. Procédé selon la revendication 5, caractérisé en ce que l'éthylène froid alimentant ledit injecteur est capté, en aval d'un échangeur de calories, sur le circuit de recyclage reliant le séparateur à l'hypercompresseur.

7. Procédé selon l'une des revendications 5 et 6, caractérisé en ce que la pression de l'éthylène froid alimentant l'injecteur est comprise entre 20 et 180 bars.

8. Procédé selon l'une des revendications 4 à 7, caractérisé en ce que la température de la zone de mélange du second réacteur est comprise entre 200° et 280°C.

9. Procédé selon l'une des revendications 3 à 8, caractérisé en ce que la pression du séparateur est comprise entre 200 et 500 bars.

10. Procédé selon l'une des revendications 1 à 9, caractérisé en ce que le catalyseur de polymérisation est désactivé en injectant, à proximité de la sortie du second réacteur, au moins un sel alcalin ou alcalino-terreux d'acide carboxylique choisi de façon que ses produits de réaction avec le catalyseur demeurent dans le polymère.

11. Procédé selon l'une des revendications 1 à 10, caractérisé en ce que l'éthylène est copolymérisé avec une α-oléfine.

12. Appareil pour effectuer la polymérisation de l'éthylène, comportant un premier réacteur ayant au moins une zone munie d'un injecteur de catalyseur, un second réacteur ayant au moins une première zone munie d'un injecteur de catalyseur et une dernière zone non munie d'un injecteur de catalyseur, une vanne de détente située à la sortie du premier réacteur et un conduit reliant ladite vanne à la dernière zone du second réacteur, un séparateur et un conduit reliant la sortie du second réacteur au séparateur, un conduit d'évacuation du polymère à la base dudit séparateur, un hypercompresseur relié par un conduit à la sortie du séparateur et comprenant une première série de cylindres et une seconde série de cylindres, un conduit reliant la première série de cylindres à au moins une zone du premier réacteur, et un conduit reliant la second série de cylindres à la première zone du second réacteur.

13. Appareil selon la revendication 12, caractérisé en ce que le conduit reliant la vanne de détente à la dernière zone du second réacteur est muni d'un dispositif capable d'assurer le mélange de l'effluent du premier réacteur et du contenu de ladite dernière zone du second réacteur.

14. Appareil selon la revendication 13, caractérisé en ce que ledit dispositif consiste en un injecteur comprenant une buse d'éjection formant l'extrémité du conduit provenant de la vanne de détente, une zone de mélange convergente en aval de ladite buse d'éjection et reliée à une source d'éthylène froid, et un diffuseur constituant l'extrémité aval de ladite zone de mélange et relié à la dernière zone du second réacteur.


Claims

1. A manufacturing process for ethylene polymers with a melt index between 0.1 and 2 and a polydispersity index exceeding 10, by polymerizing ethylene in the presence of a catalytic system comprising at least one halogenated compound of a transition metal and at least one activator selected from the hydrides and the organo-metallic compounds of the metals of groups I through III of the periodic table, in a set of two reactors operating under different temperature and pressure conditions, characterized in that the first reactor operates at a pressure between 800 and 2,000 bars and at a temperature between 160°C and 260°C and the second reactor operates at a pressure between 300 and 600 bars and at a temperature between 240°C and 340°C, the ethylene polymerization taking place in each of said reactors in the total absence of hydrogen and the flow of ethylene feeding the second reactor representing from 17 to 69% of the total ethylene flow.

2. Process according to claim 1, characterized in that the first reactor and the second reactor are arranged in series, the intake of the second reactor being connected through an expansion valve to the outlet of the first reactor.

3. Process according to claim 1, characterized in that the first reactor and the second reactor are arranged in parallel between a hypercompressor providing their ethylene supply and a separator in which the mixture of the polymers produced in the two reactors is separated from the unreacted ethylene, and said unreacted ethylene is recycled toward said hypercompressor.

4. Process according to claim 3, characterized in that the effluent from the first reactor expands to the pressure of the second reactor by passing through a valve and is moved to a zone located at the outlet of said second reactor, the so-called mixing zone of the second reactor, into which no catalytic system is injected and in which the mixing of the polymers produced in the two reactors is carried out.

5. Process according to claim 4, characterized in that said mixing zone of the second reactor is fed with polymer produced in the first reactor and with cold ethylene by an injection means located at the intake of said mixing zone.

6. Process according to claim 5, characterized in that the cold ethylene feeding said injection means is tapped downstream of a heat exchanger in the recycling circuit connecting the separator to the hypercompressor.

7. Process according to claim 5 or 6, characterized in that the pressure of the cold ethylene feeding the injection means is between 20 and 180 bars.

8. Process according to any of claims 4 to 7, characterized in that the temperature of the mixing zone of the second reactor is between 200° and 280°C.

9. Process according to any of claims 3 to 8, characterized in that the pressure in the separator is between 200 and 500 bars.

10. Process according to any of claims 1 to 9, characterized in that the polymerization catalyst is deactivated by injecting at least one alkali metal salt or alkaline earth metal salt of carboxylic acid, so selected that its reaction products with the catalyst remain in the polymer, in the vicinity of the outlet of the second reactor.

11. Process according to any of claims 1 to 10, characterized in that the ethylene is copolymerized with an alpha-olefin.

12. Apparatus for carrying out the polymerization of ethylene, comprising a first reactor with at least one zone comprising a catalyst injection means, a second reactor comprising at least one zone with a catalyst injection means and a last zone not provided with a catalyst injection means, an expansion valve located at the outlet of the first reactor and a conduit connecting said valve to the last zone of the second reactor, a separator and a conduit connecting the outlet of the second reactor to the separator, a polymer evacuation conduit at the base of said separator, a hypercompressor comprising a first set of cylinders, and a second set of cylinders, and a conduit connecting the outlet of the separator to said hypercompressor, a conduit connecting the first set of cylinders to at least one zone of the first reactor, and a conduit connecting the second set of cylinders to at least the first zone of the second reactor.

13. Apparatus according to claim 12, characterized in that the conduit connecting the expansion valve to the last zone of the second reactor is provided with a means for mixing the effluent from the first reactor with the contents of said·last zone of the second reactor.

14. Apparatus according to claim 13, characterized in that said mixing means comprises an injection means comprising a discharge nozzle forming the end of the conduit from the expansion valve, a converging mixing zone downstream of said discharge nozzle and connected to a cold-ethylene supply, and a diffusor constituting the downstream end of said mixing zone and connected to the last zone of the second reactor.

## Patentansprüche

1. Verfahren zur Herstellung von Äthylenpolymeren mit einem Fließindex zwischen 0,1 und 2 und einer Polydispersitätszahl über 10, durch Polymerisation von Äthylen in Anwesenheit eines Katalysatorsystems, das einerseits zumindest eine Halogenverbindung eines Übergangsmetalls und anderseits zumindest einen Aktivator ausgewählt aus den Hydriden und den organometallischen Verbindungen von Metallen der Gruppen I bis III des Periodensystems enthält, in einer Anordnung aus zwei unter unterschiedlichen Temperatur- und Druckbedingungen arbeitenden Reaktoren, dadurch gekennzeichnet, daß der erste Reaktor unter einem Druck von 800 bis 2000 bar und bei einer Temperatur von 160° bis 260°C und der zweite Reaktor unter einem Druck von 300 bis 600 bar und bei einer Temperatur von 240° bis 340°C arbeitet, wobei die Polymerisation des Äthylens in jedem der genannten Reaktoren unter totaler Abwesenheit von Wasserstoff abläuft und der den zweiten Reaktor speisende Äthylenstrom 17 bis 69% des Gesamtspeisestromes an Äthylen ausmacht.

2. Verfahren nach Anspruch 1, dadurch gekennzeichnet, daß der erste Reaktor und der zweite Reaktor in Serie angeordnet sind, wobei der Eingang des zweiten Reaktors über ein Druckminderventil an den Ausgang des ersten Reaktors angeschlossen ist.

3. Verfahren nach Anspruch 1, dadurch gekennzeichnet, daß der erste Reaktor und der zweite Reaktor parallel zwischen einerseits dem die Speisung mit Äthylen gewährleistenden Hyperkompressor und anderseits dem Separator angeordnet sind, in dem die Mischung der Polymerprodukte in den beiden Reaktoren von dem Äthylen, das nicht reagiert hat, getrennt werden, welches Äthylen zum genannten Hyperkompressor rückgeführt wird.

4. Verfahren nach Anspruch 3, dadurch gekennzeichnet, daß der Austrittsstrom des ersten Reaktors durch Hindurchleiten durch ein Ventil auf den Druck des zweiten Reaktors entspannt und zu einer ausgangsseitig des zweiten Reaktors gelegenen Zone, der Mischzone des zweiten Reaktors, geführt wird, in welche kein Katalysatorsystem injiziert wird und in der das Mischen der in den beiden Reaktoren hergestellten Polymeren erfolgt.

5. Verfahren nach Anspruch 4, dadurch gekennzeichnet, daß die genannte Mischzone des zweiten Reaktors mittels eines am Eingang der Mischzone angeordneten und ebenso mit kaltem Äthylen gespeisten Injektor mit im ersten Reaktor hergestelltem Polymer beschickt wird.

6. Verfahren nach Anspruch 5, dadurch gekennzeichnet, daß das den genannten Injektor speisende kalte Äthylen stromab eines Wärmetauschers des den Separator mit dem Hyperkompressor verbindenden Rückführkreises entnommen wird.

7. Verfahren nach Anspruch 5 oder 6, dadurch gekennzeichnet, daß der Druck des den injektor speisenden kalten Äthylens zwischen 20 und 180 bar liegt.

8. Verfahren nach einem der Ansprüche 4 bis 7, dadurch gekennzeichnet, daß die Temperatur der Mischzone des zweiten Reaktors zwischen 200° und 280°C beträgt.

9. Verfahren nach einem der Ansprüche 3 bis 8, dadurch gekennzeichnet, daß der Druck des Separators zwischen 200 bis 500 bar liegt.

10. Verfahren nach einem der Ansprüche 1 bis 9, dadurch gekennzeichnet, daß der Polymerisationskatalysator desaktiviert wird, indem nahe des Ausganges des zweiten Reaktors zumindest ein alkalisches oder erdalkalisches Salz der Carbonsäure injiziert wird, das so ausgewählt ist, daß seine Produkte der Reaktion mit dem Katalysator in dem Polymer verbleiben.

11. Verfahren nach einem der Ansprüche 1 bis 10, dadurch gekennzeichnet, daß das Äthylen mit einem α-Olefin copolymerisiert wird.

12. Vorrichtung zum Polymerisieren von Äthylen, mit einem ersten Reaktor mit mindestens einer mit einem Katalysatorinjektor versehenen Zone, einem zweiten Reaktor mit mindestens einer mit einem Katalysatorinjektor versehenen ersten Zone und einer nicht mit einem Katalysatorinjektor versehenen letzten Zone, einem am Ausgang des ersten Reaktors angeordneten Druckminderventil und einer das genannte Ventil mit der letzten Zone des zweiten Reaktors verbindenden Leitung, einem Separator und einer den Ausgang des zweiten Reaktors mit dem Separator verbindenden Leitung, einer Polymer-Evakuierungsleitung an der Basis des genannten Separators, einem Hyperkompressor, der über eine Leitung an den Ausgang des Separators angeschlossen ist und eine erste Serie von Zylindern und eine zweite Serie von Zylindern umfaßt, einer die erste Serie von Zylindern mit mindestens einer Zone der ersten Reaktors verbindenden Leitung und einer die zweite Serie von Zylindern mit der ersten Zone des zweiten Reaktors verbindenden Leitung.

13. Vorrichtung nach Anspruch 12, dadurch gekennzeichnet, daß die das Druckminderventil mit der letzten Zone des zweiten Reaktors verbindende Leitung mit einer Einrichtung versehen ist, die das Mischen des Austrittsstromes des ersten Reaktors und des Inhaltes der genannten letzten Zone des zweiten Reaktors sicherstellen kann.

14. Vorrichtung nach Anspruch 13, dadurch gekennzeichnet, daß die genannte Einrichtung aus einem Injektor gebildet ist, der aus einer das Ende der vom Druckminderventil kommenden Leitung bildenden Blasdüse, einer mit einer Quelle für kaltes Äthylen verbundenen konvergierenden Mischzone stromab der genannten Blasdüse und einem das stromab gelegene Ende der Mischzone bildenden und mit der letzten Zone des zweiten Reaktors verbundenen Diffusor besteht.

0013246